# EUROPEAN PATENT SPECIFICATION

(11) **EP 4 307 252 B1**
(45) Date of publication and mention of the grant of the patent: **17.06.2026**
(21) Application number: 23183857.4
(22) Date of filing: 06.07.2023
(51) Int. Cl.: G06V 20/58, G06V 10/22, G06V 10/24, G06V 10/20

(54) **PATTERN DISCRIMINATION DEVICE**
MUSTERUNTERSCHEIDUNGSVORRICHTUNG
DISPOSITIF DE DISCRIMINATION DE MOTIFS

(30) Priority: 13.07.2022 JP 2022112641
(43) Date of publication of application: 17.01.2024
(73) Proprietor: Kabushiki Kaisha Toshiba, Minato-ku Tokyo (JP)
(72) Inventor: SUZUKI, Yoshihiko, Kanagawa, 212-0013 (JP); KOBAYASHI, Hiroyuki, Kanagawa, 212-0013 (JP); TAKAHASHI, Yusuke, Kanagawa, 212-0013 (JP); OODAKE, Tatsuya, Kanagawa, 212-0013 (JP); SETO, Naoto, Kanagawa, 212-0013 (JP); FUTAGAMI, Takuya, Kanagawa, 212-0013 (JP); NAKANO, Takahisa, Kanagawa, 212-0013 (JP); ASANO, Wataru, Kanagawa, 212-0013 (JP); HATTORI, Yohei, Kanagawa, 212-0013 (JP); KATO, Noriyasu, Kanagawa, 212-0013 (JP); SEGAWA, Taisei, Kanagawa, 212-0013 (JP); NAMEKI, Hideaki, Kanagawa, 212-0013 (JP)
(74) Representative: AWA Sweden AB

(56) References cited:
- JP-A- 2021 174 221
- US-A1- 2021 207 977

## Description

### FIELD

Embodiments described herein relate generally to a pattern discrimination device.

### BACKGROUND

There is known a method of detecting a building (landmark) that is a mark, from a camera attached to a front of a vehicle (in particular, a train), and acquiring present position information of the vehicle by collation with the position information of the landmark stored in a database in advance.

For example, if the shape or gradient information of rails in the forward direction of the vehicle can be acquired from the landmark, it becomes possible to support the autonomous driving of the vehicle or a driver's operation by using the information.

JP 2021 174221 A represents relevant prior art.

### BRIEF DESCRIPTION OF THE DRAWINGS

FIG. 1 is a diagram schematically illustrating an example of an overall configuration of a pattern discrimination system including a pattern discrimination device according to one embodiment.
FIG. 2 is a block diagram illustrating an example of a configuration of a central device according to one embodiment.
FIG. 3 is a diagram illustrating examples of landmark patterns.
FIG. 4 is a diagram illustrating examples of landmark patterns.
FIG. 5 is a diagram illustrating examples of landmark patterns.
FIG. 6 is a diagram illustrating examples of landmark patterns.
FIG. 7 is a diagram illustrating examples of landmark patterns.
FIG. 8 is a diagram illustrating examples of landmark patterns.
FIG. 9 is a block diagram illustrating one configuration example of a vehicle in which a pattern discrimination device according to one embodiment is mounted.
FIG. 10 is a flowchart for describing an example of a pattern discrimination process operation of a pattern discrimination device according to one embodiment.
FIG. 11 is a flowchart for describing another example of the pattern discrimination process operation of a pattern discrimination device according to one embodiment.

### DETAILED DESCRIPTION

According to one embodiment not falling under the claims, a pattern discrimination device includes a detector configured to detect, in a landmark included in an input image of a front side of a vehicle from an imaging device that is disposed in the vehicle, a first area, and a second area having a higher surface reflection luminance than, or having a different surface reflectance from, the first area; a storage unit configured to store landmark pattern information discriminated from shapes and positions of the first area and the second area, and rail information in a traveling direction of the vehicle, the rail information being correlated with the landmark pattern information; and a specifying unit configured to acquire, from the storage unit, the rail information corresponding to the landmark pattern information corresponding to the first area and the second area detected by the detector.

Hereinafter, a pattern discrimination device according to an embodiment is described in detail with reference to the accompanying drawings. Note that in the drawings used in the description of the embodiment, scales of parts are changed as appropriate. In addition, in some cases, in the drawings used in the description of the embodiment, configurations are omitted as appropriate for the purpose of description.

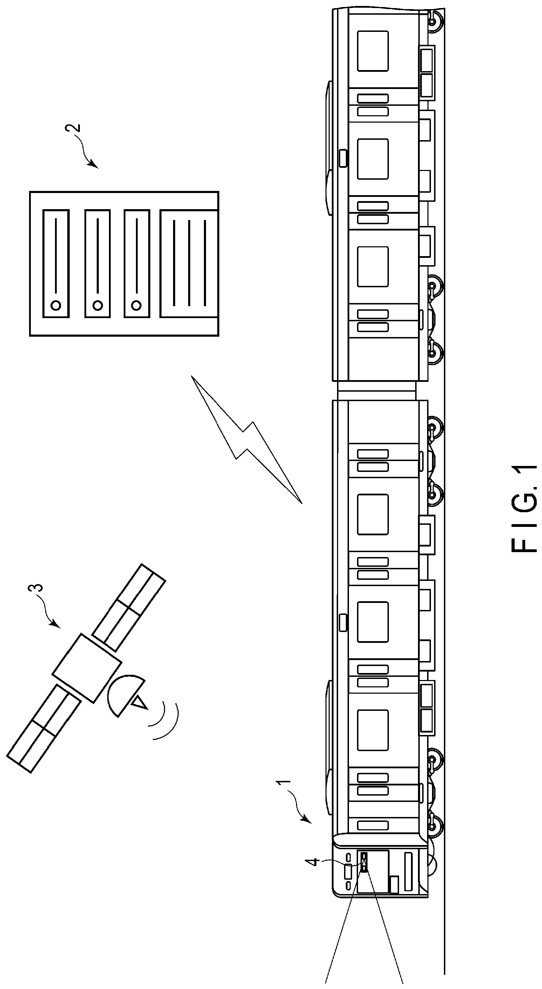

FIG. 1 is a diagram schematically illustrating an example of an overall configuration of a pattern discrimination system including a pattern discrimination device according to one embodiment.

The pattern discrimination system illustrated in FIG. 1 includes a vehicle 1 and a central device 2.

The vehicle 1 is a vehicle included in a train that runs on rails, for example, according to a predetermined schedule. Note that in a case where a train includes a plurality of vehicles, it is not necessary that all vehicles include the functions described below.

The vehicle 1 is connected to the central device 2 and a satellite 3 via a network. The vehicle 1 is, for example, a vehicle located forwardmost in a traveling direction of a train including a plurality of vehicles, and includes an antenna (not illustrated) that receives an electric wave from the satellite 3. For example, the antenna is, in design, disposed on a roof portion about 3 m backward from the frontmost position of the vehicle that is located forwardmost. The position information of the vehicle 1 is based on the position at which the antenna is disposed. In addition, position information of an imaging device 4 of the vehicle 1 can be corrected from a positional relationship between the imaging device 4 and the antenna.

The central device 2 is configured to be communicable with the vehicle 1 via a network, and manages the operational condition of, for example, a plurality of vehicles 1.

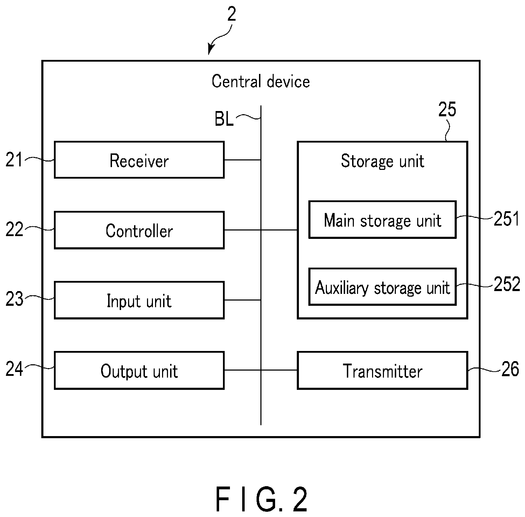

FIG. 2 is a block diagram illustrating an example of a configuration of the central device 2 according to one embodiment.

The central device 2 of the present embodiment includes a receiver 21, a controller 22, an input unit 23, an output unit 24, a storage unit 25, a transmitter 26, and a bus communication line BL1.

The bus communication line BL1 is connected to each of the structural components included in the central device 2. The controller 22 can transmit and receive data to and from the other structural components included in the central device 2 via the bus communication line BL1.

The receiver 21 receives, from the vehicle 1, landmark information and information relating to an error corrected by the vehicle 1 (hereinafter referred to as "error information"). The error information includes, for example, at least one of a fact that an error exists in present position information of the vehicle 1 (hereinafter referred to as "first position information") acquired by using GNSS position information; a fact that an error was corrected by position information of the vehicle 1 (hereinafter "second position information") acquired by using a landmark included in an input image from the imaging device 4; landmark information included in a corrected input image; and a correction area estimated from the first position information. The information included in the error information is not limited to the above. The details of the landmark information and the second position information will be described later.

The controller 22 includes at least one of processors such as a CPU (Central Process Unit), an MPU (micro processing unit), a GPU (Graphics Processing Unit), and an FPGA (field-programmable gate array). The controller 22 can implement various functions of the central device 2, based on programs, such as system software, application software or firmware, stored in an auxiliary storage unit 252.

The controller 22 compares, by referring to the position information of the vehicle 1, landmark information that is fed back from the vehicle 1, and landmark information included in the data of a map database stored in the storage unit 25. In a case where a landmark existing in a landmark candidate area included in the fed-back landmark information does not agree with a landmark existing in a landmark candidate area included in the landmark information of the map database, the controller 22 corrects the information as needed, and outputs the corrected information to the output unit 24.

The input unit 23 may include, for example, a user interface such as a mouse or a keyboard, and various kinds of sensors such as a microphone, a touch panel and a camera. The input unit 23 transmits information, which is acquired by an operation of a user, to the controller 22 via the bus communication line BL1.

The output unit 24 may include, for example, display means such as a monitor, and sound output means such as a speaker. Note that the output unit 24 may be configured to be connected to an outside of a computer. The output unit 24 displays information, which is output by the controller 22, on a monitor or the like as alarm information, or outputs the information by using sound output means such as a speaker.

The storage unit 25 includes, for example, a main storage unit 251 and an auxiliary storage unit 252.

The main storage unit 251 may include, for example, a ROM (read-only memory) and a RAM (random-access memory). The ROM is a nonvolatile memory that is used for data read only, and can store data and various setting values, which are used by the controller 22 in executing various processes. In addition, the RAM can be used as a so-called work area, in which the controller 22 temporarily stores data in executing various processes. The main storage unit 251 of the present embodiment is, for example, a RAM, and is used as a memory.

The main storage unit 251 can temporarily store the data of the map database, a position information priority setting, error information, and the like.

The auxiliary storage unit 252 is a non-transitory computer-readable storage medium of a computer whose central component is the controller 22. The auxiliary storage unit 252 is, for example, an EEPROM (trademark) (electric erasable programmable read-only memory), an HDD (hard disk drive), an SSD (solid state drive), or the like.

The auxiliary storage unit 252 can store data used by the controller 22 in executing various processes, and data or various setting values generated in the processing in the controller 22. For example, the auxiliary storage unit 252 is a memory that stores various kinds of information, and can store timetable (schedule) information, the data of the map database, position information priority setting, and error information. A concrete description of the position information priority setting will be given later.

The timetable (schedule) information includes information of the position and time of a vehicle, for example, information of a station at which the vehicle stops, a time at which the vehicle arrives at the station, and a time at which the vehicle leaves the station, in a running route of the vehicle 1.

The map database includes a plurality of sets of data, which are correlated and stored so as to correspond to the position information of the vehicle 1. The map database includes, for example, a plurality of sets of data, such as position information (latitude, longitude, altitude), land undulations (gradients), rail shapes, location features, landmark information (number, size, coordinates, type, landmark pattern information), left rail node information (number, coordinates), and right rail node information (number, coordinates). Note that the landmark information refers to information of a pattern discriminated from shapes and positions of a plurality of areas (hereinafter referred to as "first area" and "second area") with different luminosities (surface reflection luminances) and surface reflectances existing in a landmark area. In the present embodiment, it is assumed that the second area has a higher luminosity (surface reflection luminance) than, or has a different surface reflectance from, the first area. As will be described later, in order for a detector 524 to discriminate the first area and the second area of the landmark, based on the luminosity (surface reflection luminance), it is preferable that the first area and second area are formed to have a large difference in luminosity (surface reflection luminance), and, for example, it is preferable that the first area has a black color so as to lower the luminosity (surface reflection luminance), and the second area has a light color so as to increase the luminosity (surface reflection luminance).

Next, a description is given of examples of shapes and positions of the first area and second area included in the landmark information.

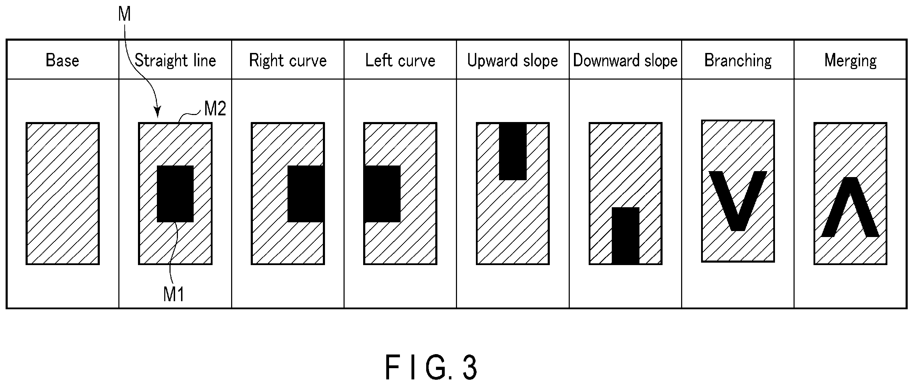

FIG. 3 to FIG. 8 are diagrams illustrating examples of a plurality of landmark patterns. In the description below of a landmark M, a vertical direction is set as a longitudinal direction, a horizontal direction is set as a transverse direction, and a right side and a left side are a right side and a left side in a case where the vehicle 1 faces toward the landmark M.

Landmarks M illustrated in FIG. 3 to FIG. 8 are provided on aerial line poles, self-supported poles, and the like, which are mainly disposed outside the rails of the vehicle 1. In the example of FIG. 3, for instance, the landmark M is formed as a base having a longitudinal dimension of about 80 cm and a transverse dimension of about 60 cm. The size and shape of the landmark M are not limited to the above, and are designed in advance in consideration of installation on the aerial line pole, self-supported pole or the like, and a contact with the vehicle 1.

In FIG. 3, a landmark M indicating a straight line of a rail shape includes a first area M1 of a rectangular shape including vertically extending long sides. The first area M1 is smaller than the area of the landmark M, and is disposed at the center of the landmark M. The area of the landmark M, excluding the first area M1, is a second area M2, and the second area M2 is disposed in such a manner as to surround the first area M1.

A landmark M indicating a right curve of a rail shape includes a first area M1 including vertically extending long sides. The first area M1 is smaller than the area of the landmark M, and is disposed such that a right end of the first area M1 overlaps a right end of the landmark M. The area of the landmark M, excluding the first area M1, is a second area M2, and the second area M2 has a substantially U shape that is in contact with short sides and a left long side of the first area M1.

A landmark M indicating a left curve of a rail shape includes a first area M1 including vertically extending long sides. The first area M1 is smaller than the area of the landmark M, and is disposed such that a left end of the first area M1 overlaps a left end of the landmark M. The area of the landmark M, excluding the first area M1, is a second area M2, and the second area M2 has a substantially U shape that is in contact with short sides and a right long side of the first area M1.

Specifically, the pattern of the landmark M indicating the left curve is a pattern obtained by rotating the pattern of the landmark M indicating the right curve over 180 degrees.

A landmark M indicating an upward slope of a gradient includes a first area M1 including vertically extending long sides. The first area M1 is smaller than the area of the landmark M, and is disposed such that an upper end of the first area M1 overlaps an upper end of the landmark M. The area of the landmark M, excluding the first area M1, is a second area M2, and the second area M2 has a substantially U shape that is in contact with a lower short side and long sides of the first area M1.

A landmark M indicating a downward slope of a gradient includes a first area M1 including vertically extending long sides. The first area M1 is smaller than the area of the landmark M, and is disposed such that a lower end of the first area M1 overlaps a lower end of the landmark M. The area of the landmark M, excluding the first area M1, is a second area M2, and the second area M2 has a substantially U shape that is in contact with an upper short side and long sides of the first area M1.

Specifically, the pattern of the landmark M indicating the downward slope is a pattern obtained by rotating the pattern of the landmark M indicating the upward slope over 180 degrees.

A landmark M indicating branching of a rail shape includes a first area M1 having a substantially V shape. The first area M1 is disposed by being spaced apart from ends of the landmark M. The area of the landmark M, excluding the first area M1, is a second area M2, and the second area M2 is disposed in such a manner as to surround the first area M1.

A landmark M indicating merging of a rail shape includes a first area M1 having a substantially V shape. The first area M1 is disposed by being spaced apart from ends of the landmark M, such that the V shape is inverted. The area of the landmark M, excluding the first area M1, is a second area M2, and the second area M2 is disposed in such a manner as to surround the first area M1.

Specifically, the pattern of the landmark M indicating the merging is a pattern obtained by rotating the pattern of the landmark M indicating the branching over 180 degrees.

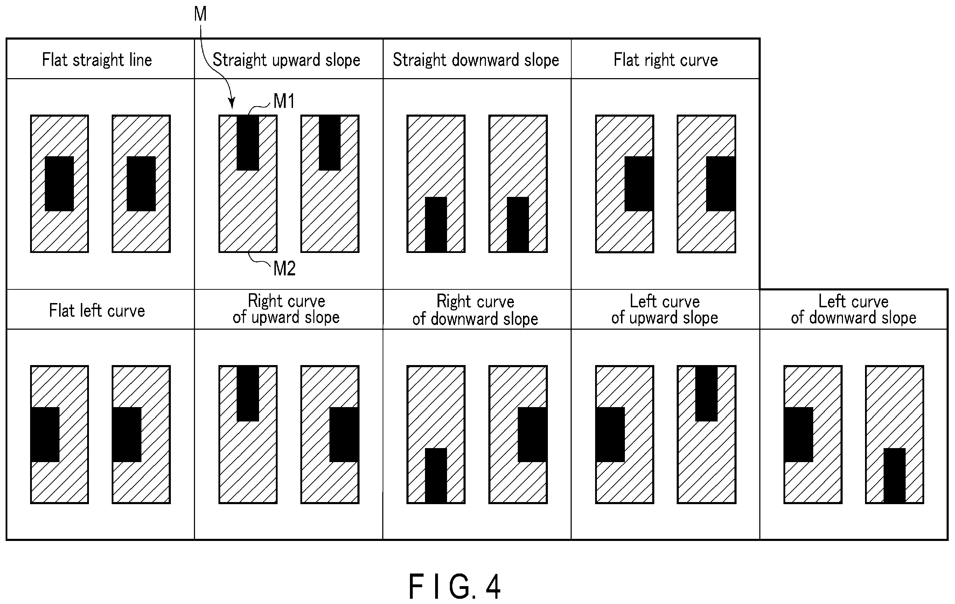

FIG. 4 illustrates examples in which a rail shape and a gradient are expressed by using two landmarks (first landmark and second landmark). Here, by combining the landmark patterns illustrated in FIG. 3, a flat straight line, a straight upward slope, a left curve of a downward slope, and so forth are expressed.

For example, a combination of landmarks M indicating a flat straight line is a combination of two landmarks M indicating the straight line in FIG. 3. A combination of landmarks M indicating a straight upward slope is a combination of two landmarks M indicating the upward slope in FIG. 3. A combination of landmarks M indicating a straight downward slope is a combination of two landmarks M indicating the downward slope in FIG. 3.

A combination of landmarks M indicating a flat right curve is a combination of two landmarks M indicating the right curve in FIG. 3. A combination of landmarks M indicating a flat left curve is a combination of two landmarks M indicating the left curve in FIG. 3.

A combination of landmarks M indicating a right curve of an upward slope is a combination of the landmark M indicating the upward slope and the landmark M indicating the right curve in FIG. 3. A combination of landmarks M indicating a right curve of a downward slope is a combination of the landmark M indicating the downward slope and the landmark M indicating the right curve in FIG. 3.

A combination of landmarks M indicating a left curve of an upward slope is a combination of the landmark M indicating the upward slope and the landmark M indicating the left curve in FIG. 3. A combination of landmarks M indicating a left curve of a downward slope is a combination of the landmark M indicating the downward slope and the landmark M indicating the left curve in FIG. 3.

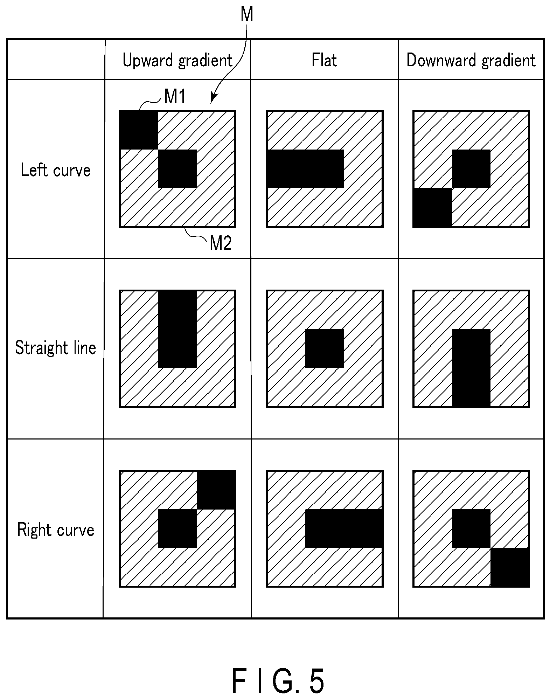

FIG. 5 to FIG. 7 express a rail shape and a gradient by using one landmark. The rail shape and gradient can be expressed by one landmark M by combining basic structures.

In the examples of FIG. 5 to FIG. 7, for example, the landmark M is formed as a base having a square shape including vertically extending sides and horizontally extending sides. The size and shape of the landmark M are designed in advance in consideration of installation on the aerial line pole, self-supported pole or the like, and a contact with the vehicle 1.

In the example illustrated in FIG. 5, a landmark M indicating a flat straight line includes a first area M1 including vertically extending sides and horizontally extending sides. The first area M1 is smaller than the area of the landmark M, and is disposed at the center of the landmark M. The area of the landmark M, excluding the first area M1, is a second area M2. The second area M2 is disposed in such a manner as to surround the first area M1.

A landmark M indicating an upward slope is obtained by extending the first area M1 to an upper end of the landmark M in the above-described pattern of the landmark M of the flat straight line.

A landmark M indicating a downward slope is obtained by extending the first area M1 to a lower end of the landmark M in the above-described pattern of the landmark M of the flat straight line.

A landmark M indicating a right curve is obtained by extending the first area M1 to a right end of the landmark M in the above-described pattern of the landmark M of the flat straight line.

A landmark M indicating a left curve is obtained by extending the first area M1 to a left end of the second area M2 in the above-described pattern of the landmark M of the flat straight line.

For example, a landmark M indicating that the rail shape is a left curve and the gradient is upward is such a landmark that in the above-described pattern of the landmark M of the flat straight line, the same square pattern as the first area M1 is disposed in contact with a left end and an upper end of the landmark M.

A landmark M indicating that the rail shape is a right curve and the gradient is upward is such a landmark that in the above-described pattern of the landmark M of the flat straight line, the same square pattern as the first area M1 is disposed in contact with a right end and an upper end of the landmark M.

A landmark M indicating that the rail shape is a left curve and the gradient is downward is such a landmark that in the above-described pattern of the landmark M of the flat straight line, the same square pattern as the first area M1 is disposed in contact with a left end and a lower end of the landmark M.

A landmark M indicating that the rail shape is a right curve and the gradient is downward is such a landmark that in the above-described pattern of the landmark M of the flat straight line, the same square pattern as the first area M1 is disposed in contact with a right end and a lower end of the landmark M.

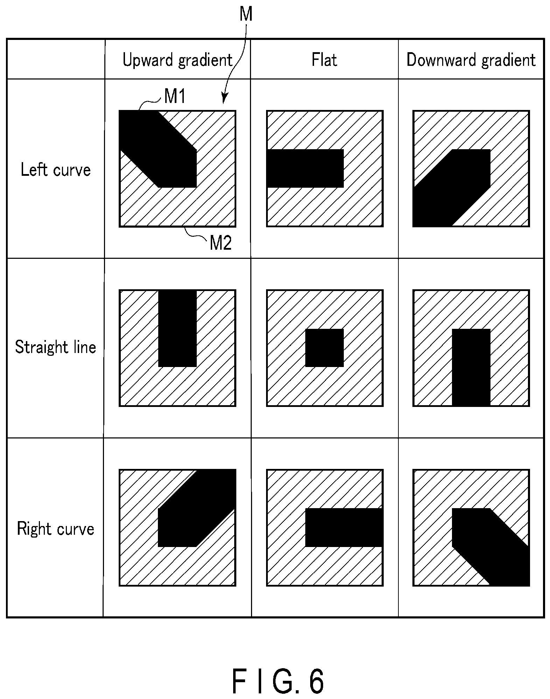

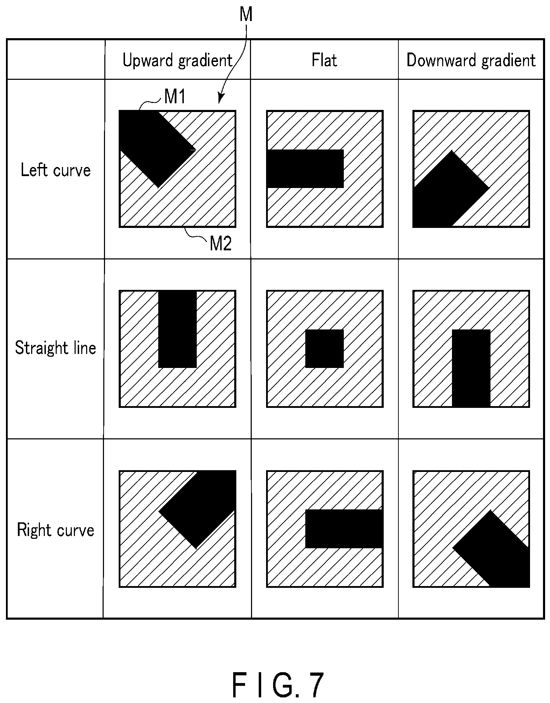

FIG. 6 and FIG. 7 illustrate variations of the patterns of the landmarks M illustrated in FIG. 5.

In FIG. 6 and FIG. 7, the patterns of landmarks M indicating the curves and upward and downward gradients are different from the patterns illustrated in FIG. 5.

For example, a pattern of a landmark M indicating a left curve and an upward gradient may be disposed such that the first area M1 extends between the center and an upper left corner of the area of the landmark M. A pattern of a landmark M indicating a left curve and a downward gradient may be disposed such that the first area M1 extends between the center and a lower left corner of the area of the landmark M. Similarly, a pattern of a landmark M indicating a right curve and an upward gradient may be disposed such that the first area M1 extends between the center and an upper right corner of the area of the landmark M. A pattern of a landmark M indicating a right curve and a downward gradient may be disposed such that the first area M1 extends between the center and a lower right corner of the area of the landmark M.

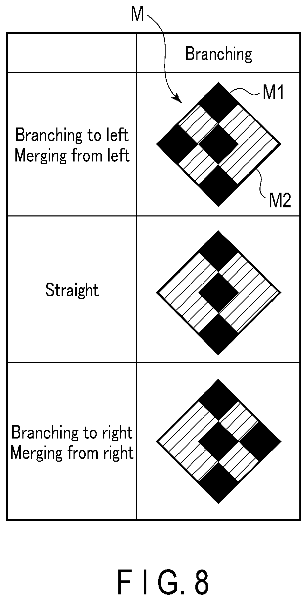

In FIG. 8, the directions of merging and branching are expressed by using one landmark M.

A landmark M indicating the directions of merging and branching is formed as a base of a square shape that is disposed such that one diagonal line extends in the vertical direction and the other diagonal line extends in the horizontal direction. The size and shape of the landmark M are designed in advance in consideration of installation on the aerial line pole, self-supported pole or the like, and a contact with the vehicle 1.

A landmark M indicating a straight line without branching includes a plurality of first areas M that are arranged along the diagonal line extending in the vertical direction of the landmark M. Each of the first areas M1 is a square pattern including a vertically extending diagonal line, and the first areas M1 are successively arranged between an upper-end corner and a lower-end corner of the landmark M. The area of the landmark M, excluding the first areas M1, is a second area M2.

A landmark M indicating branching to the left and merging from the left is such a landmark that in the above-described pattern of the landmark M indicating the straight line, a pattern of a first area M1 of a square shape is further disposed along a right-end corner of the landmark M.

A landmark M indicating branching to the right and merging from the right is such a landmark that in the above-described pattern of the landmark M indicating the straight line, a pattern of a first area M1 of a square shape is further disposed along a left-end corner of the landmark M.

Aside from the above examples, the shapes and positions of the first area and second area can freely be set in cases of landmark patterns with fixed regularity.

In the map database, pieces of data are correlated with, for example, identifiers (for example, row numbers) that are added in the order of pieces of position information of positions over which the vehicle runs. Note that the data stored in the map database is not limited to the above. It is assumed that the data of the map database is acquired or updated in advance by a dedicated vehicle.

The coordinates in the left-and-right rail node information included in the map database are position coordinates of rails in a photographed image captured by the imaging device 4 while the vehicle 1 runs over a position of the position information (latitude, longitude, altitude). The coordinates of a node are calculated by setting an upper left of an input image from the imaging device 4 (an upper left in a case of facing toward the traveling direction of the vehicle 1) as a reference 0 (origin), and setting the right in a horizontal direction from the reference as an x-axis positive value and the down side in a vertical direction from the reference as a y-axis positive value. It is assumed that the reference point and the axes are preset by a map database creator or the like. In addition, the same applies to the coordinates in the landmark information stored in the map database.

The transmitter 26 transmits the data of the map database to the vehicle 1 (a pattern discrimination device 5 and a support control device 6 to be described later). Note that the data of the map database in the central device 2 may include data of two map databases of master data and vehicle instruction data. The master data of the map database includes detailed map information of the entire running route, and the vehicle instruction data of the map database is data including at least partial information of the master data and includes data in a running route for each vehicle according to the schedule (timetable). Upon a request from the vehicle 1, or periodically, the transmitter 26 transmits at least the vehicle instruction data to the pattern discrimination device 5 and the support control device 6 of the vehicle 1.

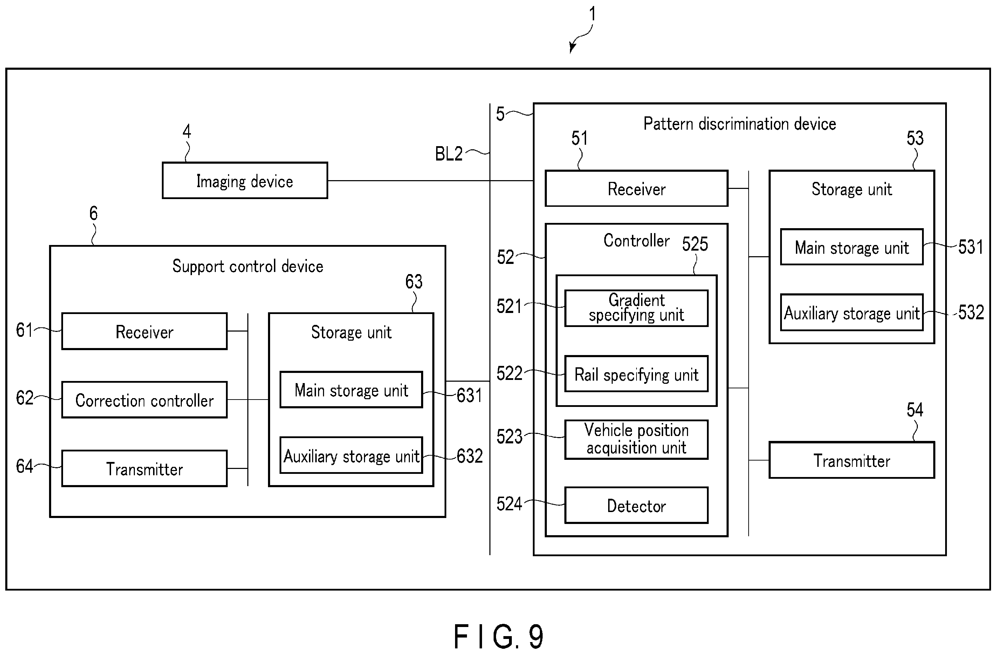

FIG. 9 is a block diagram illustrating one configuration example of a vehicle in which a pattern discrimination device according to one embodiment is mounted.

A vehicle 1 of the present embodiment includes an imaging device 4, a pattern discrimination device 5, a support control device 6, and a bus communication line BL2.

The bus communication line BL2 is connected to each of the structural components included in the vehicle 1. A controller 52 included in the pattern discrimination device 5, and a correction controller 62 included in the support control device 6 can communicate data with the other structural components included in the vehicle 1 via the bus communication line BL2.

The imaging device 4 is, for example, a stereo camera that photographs the front side of the vehicle 1. The imaging device 4 transmits a photographed image to the pattern discrimination device 5 as an input image. In a case where a frame rate is 30 fps, the imaging device 4 may be configured to transmit input images 30 times per second. The frequency, at which the imaging device 4 transmits input images to the pattern discrimination device 5, is not limited to the above, and may be changed as appropriate in accordance with the frame rate of the imaging device 4 and the frequency of electric wave reception from the satellite 3. Note that the imaging device 4 may include, for example, a LiDAR or a distance sensor, may detect a distance to an object existing on the front side of the vehicle 1, and may transmit a detection value to the pattern discrimination device 5. However, the pattern of a landmark cannot directly be detected or discriminated from the distance information acquired by the LiDAR or a TOF distance sensor. Thus, it is conceivable to make it possible to detect and discriminate the pattern of the landmark, by inputting a numerical value (image, two-dimensional data), which represents a difference in reflectance of the object surface acquired by the sensors, to the pattern discrimination device 5 and processing the numerical value.

The support control device 6 includes a receiver 61, a correction controller 62, a storage unit 63, and a transmitter 64.

The receiver 61 receives the first position information from the antenna that receives an electric wave of the satellite 3. The receiver 61 includes a function of receiving a plurality of data of the map database. In addition, the receiver 61 receives, from the pattern discrimination device 5, the second position information and the landmark information.

The correction controller 62 includes at least one of processors such as a CPU (Central Process Unit), an MPU (micro processing unit), a GPU (Graphics Processing Unit), and an FPGA (field-programmable gate array). The correction controller 62 can implement various functions of the support control device 6, based on programs, such as system software, application software or firmware, stored in an auxiliary storage unit 632.

The correction controller 62 compares the first position information and the second position information, and executes a process corresponding to the comparison result. To be more specific, the correction controller 62 detects an error between the first position information and the second position information, and, in a case where the error exceeds a predetermined threshold, refers to a position information priority setting, and can correct the error by setting the first position information or the second position information as the present position information of the vehicle 1.

The storage unit 63 includes, for example, a main storage unit 631 and an auxiliary storage unit 632.

The main storage unit 631 may include, for example, a ROM (read-only memory) and a RAM (random-access memory). The ROM is a nonvolatile memory that is used for data read only, and can store data and various setting values, which are used by the correction controller 62 in executing various processes. In addition, the RAM can be used as a so-called work area, in which the correction controller 62 temporarily stores data in executing various processes. The main storage unit 631 of the present embodiment is, for example, a RAM, and is used as a memory.

The main storage unit 631 can temporarily store the data of the map database, first position information, second position information, landmark information, position information priority setting, and information (error information) relating to an error corrected by the correction controller 62.

The auxiliary storage unit 632 is a non-transitory computer-readable storage medium of a computer whose central component is the correction controller 62. The auxiliary storage unit 632 is, for example, an EEPROM (trademark) (electric erasable programmable read-only memory), an HDD (hard disk drive), an SSD (solid state drive) or the like.

The auxiliary storage unit 632 can store data used by the correction controller 62 in executing various processes, and data or various setting values generated in the processing in the correction controller 62. For example, the auxiliary storage unit 632 is a memory that stores various kinds of information, and can store the data of the map database, first position information, second position information, landmark information, position information priority setting, and information (error information) relating to an error corrected by the correction controller 62.

The transmitter 64 transmits the landmark information and the error information to the central device 2. In addition, the transmitter 64 transmits the error information to the pattern discrimination device 5.

The pattern discrimination device 5 of the present embodiment includes a receiver 51, a controller 52, a storage unit 53, and a transmitter 54.

The pattern discrimination device 5 may include a processor that executes programs for implementing various functions to be described later, and a memory storing the programs. The processor is typically a CPU (Central Processing Unit) and/or a GPU (Graphics Processing Unit), but may be a microcomputer, an FPGA (Field Programmable Gate Array), or a DSP (Digital Signal Processor). In addition, the memory records a program that is executed by the processor in order to implement the operation of the pattern discrimination device 5, and temporarily stores data or the like used by the processor. Note that the program may be recorded in a recording medium that is readable by the pattern discrimination device 5. In this case, the processor can implement various functions by executing the program that is read from the recording medium.

The receiver 51 receives the first position information from the antenna that receives an electric wave of the satellite 3. The receiver 51 includes a function of receiving, from the central device 2, a plurality of pieces of the timetable information and the data of the map database. The receiver 51 can receive, for example, the timetable of the running route for one day and the data of the map database in a batchwise manner from the central device 2 before starting the running for the day.

The receiver 51 can receive the data of the map database in accordance with the operational condition. The data of the map database that the receiver 51 receives may be configured, for example, such that when the vehicle 1 moves from a station A to a station B, the data from the station A to the station B is received from the central device 2, and then, when the vehicle 1 moves from the station B to a station C, the data from the station B to the station C is received from the central device 2. In addition, for example, the data of the map database that the receiver 51 receives from the central device 2 may be configured such that only the data correlated with the position information of several meters before and after the present position information of the vehicle 1 is received, and this data is updated in real time.

The receiver 51 further receives an input image from the imaging device 4. The imaging device 4 and the receiver 51 may be communicably connected by wire, or may be communicably connected wirelessly. The receiver 51 can communicate with the imaging device 4, for example, based on communication standards such as the internet, Ethernet (trademark), wireless LAN (Wi-Fi (trademark) or the like), and Bluetooth (trademark).

The controller 52 includes at least one of processors such as a CPU (Central Process Unit), an MPU (micro processing unit), a GPU (Graphics Processing Unit), and an FPGA (field-programmable gate array). The controller 52 can implement various functions of the pattern discrimination device 5, based on programs, such as system software, application software or firmware, stored in an auxiliary storage unit 532.

The controller 52 includes a specifying unit 525, a vehicle position acquisition unit 523, and a detector 524. The specifying unit 525 includes a gradient specifying unit 521 and a rail specifying unit 522.

The detector 524 detects, among objects included in the input image or distance image from the imaging device 4, an object (hereinafter referred to as "landmark") that is an immovable property and has features in regard to the shape, luminosity (surface reflection luminance), color, pattern and the like. The information of the landmark is included in the data of the map database in advance, and is stored by being correlated with rail information. Note that the rail information includes at least either rail shape information or gradient information.

The detector 524 displays a landmark candidate area after recognizing the presence of a landmark by referring to landmark information correlated with the first position information. The data included in the landmark information is, for example, the number of landmarks, the size (vertical and horizontal), coordinates (x, y), and a landmark type (for example, an object attached to an aerial line pole or a self-supported pole, a building, or the like), and data of a landmark pattern.

The detector 524 detects a landmark in the landmark candidate area, and divides the area in accordance with the shape of the landmark and the luminosity (surface reflection luminance) of the pattern. For example, in the landmark included in the input image of the front side of the vehicle from the imaging device that is disposed in the vehicle, the detector 524 detects a first area, and a second area having a higher luminosity (surface reflection luminance) than, or having a different surface reflectance from, the first area.

The specifying unit 525 specifies landmark pattern information corresponding to the first area and the second area detected by the detector 524, and acquires, from the storage unit 53, rail information corresponding to the specified landmark pattern information. The rail information that the specifying unit 525 acquires includes at least either rail shape information or gradient information. The specifying unit 525 can acquire, from the storage unit 53, at least either the rail shape or the gradient information, which is based on the landmark.

The specifying unit 525 transmits the acquired rail information to the vehicle position acquisition unit 523. In addition, the specifying unit 525 may transmit the acquired rail information to the support control device 6. The vehicle 1 may use the rail information for speed control or the like.

The rail specifying unit 522 specifies, in regard to the landmark detected by the detector 524, landmark pattern information corresponding to the first area and the second area, and acquires, from the storage unit 53, rail shape information corresponding to the specified landmark pattern information.

The gradient specifying unit 521 specifies, in regard to the landmark detected by the detector 524, landmark pattern information corresponding to the first area and the second area, and acquires, from the storage unit 53, gradient information corresponding to the specified landmark pattern information.

The vehicle position acquisition unit 523 can acquire position information by using the data specified by the rail specifying unit 522. The position information acquired by the vehicle position acquisition unit 523 becomes the second position information.

Based on the rail information acquired by the specifying unit 525, the vehicle position acquisition unit 523 acquires the present position information of the vehicle (second position information) from the storage unit 53. Note that the rail information is correlated with the position information on the data of the map database, and, for example, the vehicle position acquisition unit 523 may acquire the present position information of the vehicle (second position information) from the storage unit 53, based on the rail shape information acquired by the rail specifying unit 522, or may acquire the present position information (second position information) from the storage unit 53, based on the gradient information acquired by the gradient specifying unit 521, or may acquire the present position information (second position information) from the storage unit 53, based on the first position information and the rail information.

The vehicle position acquisition unit 523 compares the first position information and the second position information, and, in a case where there is an error between the first position information and the second position information, the vehicle position acquisition unit 523 selects the position information in accordance with the position information priority setting in which the position information, to which priority is to be given due to rail shapes or other factors, is set in advance. Note that the process of selecting the position information of the vehicle 1 may not be executed by the vehicle position acquisition unit 523, and the support control device 6 may correct the error, and the pattern discrimination device 5 may be configured to execute the process, based on the corrected result.

The above-described position information priority setting based on the rail shape is merely an example, and is not limited to this example. In the position information priority setting, the reliability of each of the first position information and the second position information can be set as one index.

In the present embodiment, the positioning method of the position information using the GNSS includes singular positioning, relative positioning, and self-position detection. In the singular positioning, information, such as the position and time of the satellite, which is transmitted from the GNSS satellite, is received by a single antenna, thereby measuring a time needed from when an electric wave is emitted from the satellite to when the electric wave reaches the receiver, and converting the time to a distance. By setting a GNSS satellite, the position of which is recognized, as a reference point of movement, distances from four or more satellites to an observation point are recognized at the same time, thereby determining the position of the vehicle 1.

In the relative positioning, two or more receivers are used, and four or more identical GNSS satellites are observed at the same time. Setting the positions of the GNSS satellites as references, a time difference between the electric wave signals reaching the receivers from the GNSS satellites is measured, and a relative positional relationship between two points is computed.

In the self-position detection, for example, in a case of performing self-position estimation in a place or the like where the electric wave from the GNSS satellite does not reach, the position information is computed based on three-axis sensor measurement values of an inertial sensor, the number of revolutions of the wheels, the present speed of the vehicle, or the like.

In regard to the reliability of position information, the singular positioning using an L6 reinforcement signal has a highest reliability, the relative positioning has a second highest reliability, the singular position without a reinforcement signal has a third highest reliability, and the self-position detection has a lowest reliability. The position information error in the relative positioning is about 0.5 m or less, the position information error in the singular positioning is about 1 to 2 m or less, and the position information error in the self-position detection is greater than these. Thus, the position information priority setting is set in accordance with the positioning method. The position information priority setting is preset by an administrator or a user of the position information detection system.

A concrete example of the above-described position information priority setting is described. If it is assumed that the vehicle 1 runs at 108 km per hour (30 m per second) and the frame rate of the imaging device 4 is 30 fps, the distance of movement of one frame is about 1 m. If it is assumed that the vehicle 1 runs at 36 km per hour (10 m per second) and the frame rate of the imaging device 4 is 30 fps, the distance of movement of one frame is about 0.3 m. In this manner, since the distance of movement of one frame varies in accordance with the speed of the vehicle 1, an error amount of the position information of the vehicle 1 also varies. Thus, the position information priority setting is set, for example, such that priority is given to the first position information in the case of the relative positioning, and priority is given to the second position information in the case of the singular positioning or self-position detection.

In addition, in a case where the area is a place where electric waves do not reach, for example, a tunnel, the first position information is obtained by the self-position detection, and is set in accordance with the shape of the rail in the similar manner as described above. Note that the second position information has a higher reliability than the first position information, and is set to have a highest priority regardless of the shape of the rail.

The storage unit 53 includes, for example, a main storage unit 531 and an auxiliary storage unit 532.

The main storage unit 531 may include, for example, a ROM (read-only memory) and a RAM (random-access memory). The ROM is a nonvolatile memory that is used for data read only, and can store data and various setting values, which are used by the controller 52 in executing various processes. In addition, the RAM can be used as a so-called work area, in which the controller 52 temporarily stores data in executing various processes. The main storage unit 531 of the present embodiment is, for example, a RAM, and is used as a memory.

The main storage unit 531 can temporarily store the data of the map database, the first position information, the input image from the imaging device 4, the second position information, the landmark information, the position information priority setting, the landmark pattern information discriminated from the shapes and positions of the first area and second area included in the landmark information, the rail information in the traveling direction of the vehicle, which is correlated with the landmark pattern information, and the second position information correlated with the rail information.

The auxiliary storage unit 532 is a non-transitory computer-readable storage medium of a computer whose central component is the controller 52. The auxiliary storage unit 532 is, for example, an EEPROM (trademark) (electric erasable programmable read-only memory), an HDD (hard disk drive), an SSD (solid state drive) or the like.

The auxiliary storage unit 532 can store data used by the controller 52 in executing various processes, and data or various setting values generated in the processing in the controller 52. For example, the auxiliary storage unit 532 is a memory that stores various kinds of information, and can store the data of the map database, the first position information, the input image from the imaging device 4, the landmark information, the position information priority setting, the landmark pattern information discriminated from the shapes and positions of the first area and second area included in the landmark information, the rail information in the traveling direction of the vehicle, which is correlated with the landmark pattern information, and the second position information correlated with the rail information.

The transmitter 54 transmits the second position information and the landmark information to the support control device 6. The transmitter 54 can execute communication, for example, based on communication standards such as the internet, Ethernet (trademark), wireless LAN (Wi-Fi (trademark) or the like), and Bluetooth (trademark).

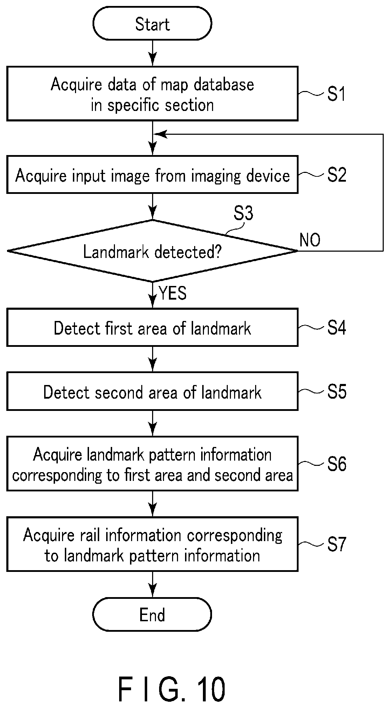

FIG. 10 is a flowchart for describing an example of a pattern discrimination process operation of a pattern discrimination device according to one embodiment.

Hereinafter, a description is given of an example of a procedure of acquiring, by the pattern discrimination device 5, a first area and a second area of a landmark, and acquiring corresponding landmark pattern information and rail information. Note that the content of the process in the following description of the operation is merely an example, and various processes, by which similar advantageous effects can be obtained, can be utilized as appropriate.

In FIG. 10, the pattern discrimination device 5 receives, for example, vehicle instruction data (hereinafter referred to as "data") of the map database in a specific section from the central device 2 by the receiver 51. The pattern discrimination device 5 stores the data in the storage unit 53, and the controller 52 acquires the data from the storage unit 53 (step S1). Since the vehicle 1 of the present embodiment is a vehicle that runs on a route determined according to a schedule, a time in which the vehicle runs between predetermined stations is determined in advance, and the data is acquired by using this time as a reference.

The controller 52 acquires an input image corresponding to the frame number from the imaging device 4 (step S2). It is assumed that the input image is acquired by the controller 52 in real time.

The detector 524 determines whether a landmark is detected (step S3). As a method of detecting a landmark, for example, landmark information correlated with the first position information is referred to, and a landmark candidate area is displayed. If a landmark is absent in the landmark candidate area, the detector 524 determines "NO" in step S3, and returns to before the process of S2. In other words, the detector 524 repeats the process of S2 and S3 until detecting a landmark. On the other hand, if a landmark is present in the landmark candidate area, the detector 524 determines "YES" in step S3, and goes to the next process.

If a landmark is present in the landmark candidate area, the detector 524, determines "YES" in step S3, and advances to the next process.

The detector 524 detects a first area of the landmark (step S4). Next, the detector 524 detects a second area of the landmark (step S5). The area detection of step S4 and the area detection of step S5 may be executed at the same timing, or such a configuration may be adopted that the areas are detected with a time difference.

The specifying unit 525 acquires landmark pattern information corresponding to the first area and second area, the landmark pattern information being stored in the storage unit 53 (step S6).

The specifying unit 525 acquires rail information corresponding to the landmark pattern information from the storage unit 53 (step S7), and terminates the process.

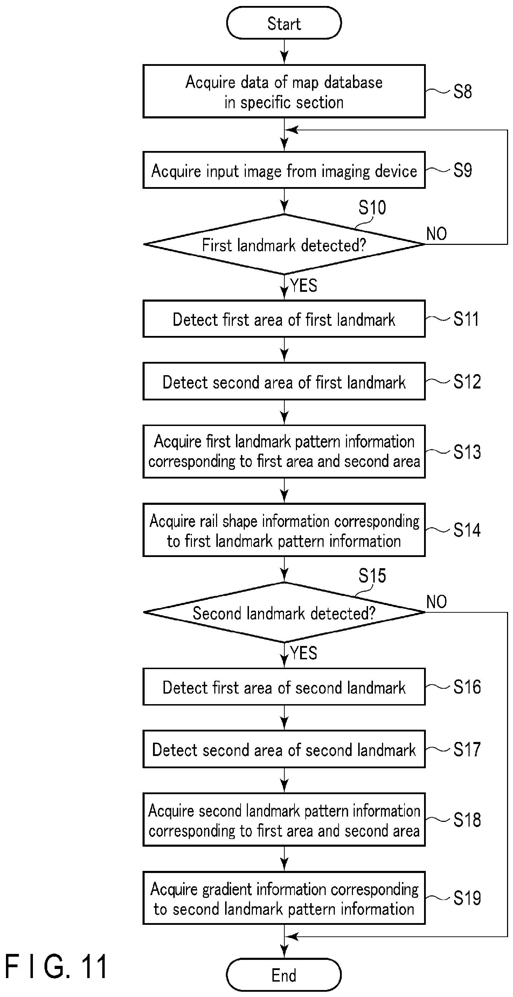

FIG. 11 is a flowchart for describing another example of the pattern discrimination process operation of a pattern discrimination device according to one embodiment.

In FIG. 11, the pattern discrimination device 5 receives, for example, vehicle instruction data (hereinafter referred to as "data") of the map database in a specific section from the central device 2 by the receiver 51. The pattern discrimination device 5 stores the data in the storage unit 53, and the controller 52 acquires the data from the storage unit 53 (step S8).

The controller 52 acquires an input image corresponding to the frame number from the imaging device 4 (step S9). It is assumed that the input image is acquired by the controller 52 in real time.

The detector 524 determines whether a first landmark is detected (step S10). If a first landmark is absent in the landmark candidate area, the detector 524 determines "NO" in step S10, and returns to before the process of S9. In other words, the detector 524 repeats the process of S9 and S10 until detecting a first landmark. On the other hand, if a first landmark is present in the landmark candidate area, the detector 524 determines "YES" in step S10, and goes to the next process.

The detector 524 detects a first area of the first landmark (step S11). Next, the detector 524 detects a second area of the first landmark (step S12). The area detection of step S11 and the area detection of step S12 may be executed at the same timing, or such a configuration may be adopted that the areas are detected with a time difference.

The rail specifying unit 522 acquires landmark pattern information (first landmark pattern information) corresponding to the first area and second area, the landmark pattern information being stored in the storage unit 53 (step S13).

The rail specifying unit 522 acquires rail shape information corresponding to the landmark pattern information from the storage unit 53 (step S14), and advances to the next process.

The detector 524 determines whether a second landmark is detected (step S15). If a second landmark is present in the landmark candidate area, the detector 524 determines "YES" in step S15, and goes to the next process.

The detector 524 detects a first area of the second landmark (step S16). Next, the detector 524 detects a second area of the second landmark (step S17).

The gradient specifying unit 521 acquires landmark pattern information (second landmark pattern information) corresponding to the first area and second area, the landmark pattern information being stored in the storage unit 53 (step S18).

The gradient specifying unit 521 acquires gradient information corresponding to the landmark pattern information from the storage unit 53 (step S19), and terminates the process.

According to the pattern discrimination device 5 of the present embodiment, the pattern discrimination device 5 acquires the rail shape and gradient information from the landmark pattern information, and thereby, for example, in a case where the rails in the forward direction have a curved shape and a downward gradient, such control as lowering the vehicle speed in advance can be executed.

Specifically, according the present embodiment, there can be provided a pattern discrimination device that acquires rail information for supporting the driving of a vehicle.

While certain embodiments of the present invention have been described, these embodiments have been presented by way of example only, and are not intended to limit the scope of the invention. These novel embodiments may be implemented in a variety of other forms falling within the scope of the accompanying claims.

In the above-described embodiments, landmark pattern information, and rail information in a traveling direction of a vehicle, which is correlated with the landmark pattern information, are included in the map database, but the pattern discrimination device of the embodiments is not limited to this configuration, and the landmark pattern information and the rail information may be recorded in the storage unit 53 of the vehicle 1 in advance. Even in this case, the same advantageous effects as in the above-described embodiments can be obtained.

## Claims

1. A pattern discrimination device comprising:
a detector configured to detect, in a landmark included in an input image of a space in front of a vehicle from an imaging device that is disposed in the vehicle, a first area, and a second area having a higher surface reflection luminance than, or having a different surface reflectance from, the first area;
a storage unit configured to store landmark pattern information discriminated from shapes and positions of the first area and the second area, and rail information including rail shape information and gradient information in a traveling direction of the vehicle, the rail information being correlated with the landmark pattern information; and
a specifying unit configured to acquire, from the storage unit, the rail information corresponding to the landmark pattern information corresponding to the first area and the second area detected by the detector, and transmit the acquired rail information to an external device so as to control speed of the vehicle through the external device.

2. The pattern discrimination device of Claim 1, wherein
the detector detects the first areas and the second areas of a first landmark and a second landmark,
the storage unit stores the rail shape information correlated with first landmark pattern information discriminated from shapes and positions of the first area and the second area of the first landmark, and the gradient information correlated with second landmark pattern information discriminated from shapes and positions of the first area and the second area of the second landmark, and
the specifying unit includes a rail specifying unit configured to acquire the rail shape information corresponding to the first landmark pattern information from the storage unit, and a gradient specifying unit configured to acquire the gradient information corresponding to the second landmark pattern information from the storage unit.

3. The pattern discrimination device of Claim 1, wherein
the specifying unit acquires, from the storage unit, the rail shape information and the gradient information corresponding to the landmark pattern information.

4. The pattern discrimination device of Claim 1, wherein
the storage unit further stores position information correlated with the rail information, and
the pattern discrimination device includes a vehicle position acquisition unit configured to acquire present position information of the vehicle from the storage unit, based on the rail information acquired by the specifying unit.

## Patentansprüche

1. Musterunterscheidungsvorrichtung, umfassend:
einen Detektor, der dazu ausgestaltet ist, in einem Merkmalspunkt, der in einem Eingabebild eines Raums vor einem Fahrzeug von einer Bildgebungsvorrichtung enthalten ist, die in dem Fahrzeug angeordnet ist, einen ersten Bereich und einen zweiten Bereich zu detektieren, der eine höhere Flächenreflexionsleuchtdichte als der erste Bereich oder einen davon unterschiedlichen Flächenreflexionsgrad aufweist;
eine Speichereinheit, die dazu ausgestaltet ist, Merkmalspunkt-Musterinformationen, die von Formen und Positionen des ersten Bereichs und des zweiten Bereichs unterschieden werden, und Schieneninformationen, die Schienenforminformationen und Gradienteninformationen in einer Fahrtrichtung des Fahrzeugs umfassen, zu speichern, wobei die Schieneninformationen mit den Merkmalspunkt-Musterinformationen korreliert sind; und
eine Angabeeinheit, die dazu ausgestaltet ist, von der Speichereinheit die Schieneninformationen, die den Merkmalspunkt-Musterinformationen entsprechen, die dem ersten Bereich und dem zweiten Bereich entsprechen, die von dem Detektor detektiert werden, zu erfassen und die erfassten Schieneninformationen an eine externe Vorrichtung zu senden, um eine Geschwindigkeit des Fahrzeugs durch die externe Vorrichtung zu steuern.

2. Musterunterscheidungsvorrichtung nach Anspruch 1, wobei
der Detektor die ersten Bereiche und die zweiten Bereiche eines ersten Merkmalspunkts und eines zweiten Merkmalspunkts detektiert,
die Speichereinheit die Schienenforminformationen, die mit ersten Merkmalspunkt-Musterinformationen korreliert sind, die von Formen und Positionen des ersten Bereichs und des zweiten Bereichs des ersten Merkmalspunkts unterschieden werden, und die Gradienteninformationen speichert, die mit zweiten Merkmalspunkt-Musterinformationen korreliert sind, die von Formen und Positionen des ersten Bereichs und des zweiten Bereichs des zweiten Merkmalspunkts unterschieden werden, und
die Angabeeinheit eine Schienenangabeeinheit, die dazu ausgestaltet ist, die Schienenforminformationen, die den ersten Merkmalspunkt-Musterinformationen entsprechen, von der Speichereinheit zu erfassen, und eine Gradientenangabeeinheit umfasst, die dazu ausgestaltet ist, die Gradienteninformationen, die den zweiten Merkmalspunkt-Musterinformationen entsprechen, von der Speichereinheit zu erfassen.

3. Musterunterscheidungsvorrichtung nach Anspruch 1, wobei
die Angabeeinheit von der Speichereinheit die Schienenforminformationen und die Gradienteninformationen erfasst, die den Merkmalspunkt-Musterinformationen entsprechen.

4. Musterunterscheidungsvorrichtung nach Anspruch 1, wobei
die Speichereinheit ferner Positionsinformationen speichert, die mit den Schieneninformationen korreliert sind, und
die Musterunterscheidungsvorrichtung eine Fahrzeugpositionserfassungseinheit umfasst, die dazu ausgestaltet ist, aktuelle Positionsinformationen des Fahrzeugs von der Speichereinheit auf der Grundlage der von der Angabeeinheit erfassten Schieneninformationen zu erfassen.

## Revendications

1. Dispositif de discrimination de motifs comprenant :
un détecteur configuré pour détecter, dans un repère inclus dans une image d'entrée d'un espace devant un véhicule à partir d'un dispositif d'imagerie qui est disposé dans le véhicule, une première zone, et une deuxième zone présentant une luminance de réflexion de surface supérieure à, ou présentant une réflectance de surface différente de, la première zone ;
une unité de stockage configurée pour stocker des informations de motif de repère discriminées à partir de formes et de positions de la première zone et de la deuxième zone, et des informations de rail incluant des informations de forme de rail et des informations de gradient dans une direction de déplacement du véhicule, les informations de rail étant corrélées avec les informations de motif de repère ; et
une unité de spécification configurée pour acquérir, à partir de l'unité de stockage, les informations de rail correspondant aux informations de motif de repère correspondant à la première zone et à la deuxième zone détectées par le détecteur, et transmettre les informations de rail acquises à un dispositif externe de manière à commander une vitesse du véhicule par l'intermédiaire du dispositif externe.

2. Dispositif de discrimination de motifs selon la revendication 1, dans lequel
le détecteur détecte les premières zones et les deuxièmes zones d'un premier repère et d'un deuxième repère,
l'unité de stockage stocke les informations de forme de rail corrélées avec des informations de motif de premier repère discriminées à partir de formes et de positions de la première zone et de la deuxième zone du premier repère, et les informations de gradient corrélées avec des informations de motif de deuxième repère discriminées à partir de formes et de positions de la première zone et de la deuxième zone du deuxième repère, et
l'unité de spécification inclut une unité de spécification de rail configurée pour acquérir les informations de forme de rail correspondant aux informations de motif de premier repère à partir de l'unité de stockage, et une unité de spécification de gradient configurée pour acquérir les informations de gradient correspondant aux informations de motif de deuxième repère à partir de l'unité de stockage.

3. Dispositif de discrimination de motifs selon la revendication 1, dans lequel
l'unité de spécification acquiert, à partir de l'unité de stockage, les informations de forme de rail et les informations de gradient correspondant aux informations de motif de repère.

4. Dispositif de discrimination de motifs selon la revendication 1, dans lequel
l'unité de stockage stocke en outre des informations de position corrélées avec les informations de rail, et
le dispositif de discrimination de motifs inclut une unité d'acquisition de position de véhicule configurée pour acquérir des informations de position actuelles du véhicule à partir de l'unité de stockage, sur la base des informations de rail acquises par l'unité de spécification.
